# EUROPÄISCHE PATENTSCHRIFT

(11) **EP 2 711 210 B1**
(45) Veröffentlichungstag und Bekanntmachung des Hinweises auf die Patenterteilung: **01.02.2017**
(21) Anmeldenummer: 13180799.2
(22) Anmeldetag: 19.08.2013
(51) Int. Cl.: B60D 1/54

(54) **Kugelschwenkmodul**
Spherical swivel module
Module de basculement de sphère

(30) Priorität: 19.09.2012 DE 102012216794
(43) Veröffentlichungstag der Anmeldung: 26.03.2014
(73) Patentinhaber: ZF Friedrichshafen AG, 88046 Friedrichshafen (DE)
(72) Erfinder: Stratmann, Julian, 49324 Melle (DE); Nordloh, Alfons, 49429 Visbek (DE)

(56) Entgegenhaltungen:
- EP-A1- 1 826 033
- DE-A1-102009 045 290
- DE-U1-202011 103 345

## Beschreibung

Die Erfindung betrifft ein Kugelschwenkmodul für eine Anhängerkupplung gemäß dem Oberbegriff des Anspruchs 1.

Im Stand der Technik sind viele Ankopplungsvarianten für Anhängerkupplungen bekannt, um diese an einem Fahrzeug zu befestigen. Sie reichen von einfachen, starren Verbindungen über abnehmbare Steck- oder mechanische Schwenksysteme bis hin zu vollelektrisch schwenkbaren Anhängerkupplungen. Letztere heben sich dadurch ab, dass keinerlei Betätigungsaufwand durch den Anwender direkt an der Anhängerkupplung erfolgen muss, um ein Ein- und Ausschwenken der Anhängerkupplung zu bewirken. Ein Tastendruck reicht aus, um ein Entriegeln, Schwenken und Verriegeln auszulösen.

Bekannt sind weiterhin Anhängerkupplungen mit einem Schwenkmodul, welches eine überlagerte Dreh- und Kippbewegung ermöglicht. Diese Überlagerungsbewegung hat gegenüber einer Anhängerkupplung, welche sich nur um eine Achse dreht, den Vorteil, dass sie einen kleineren Schwenkraum benötigt, was im Endeffekt Bauraumvorteile bietet.

Beispielsweise ist in DE 10 2008 002 207 A1 ein Kugelgelenk für eine Anhängerkupplung beschrieben, welches mittels einer Zwangsführung eines Kugelzapfens eine Verdrehung um seine Längsachse ermöglicht, bei welcher gleichzeitig eine seitliche Auslenkung erfolgt. Dies wird durch Vorsehen einer nicht ebenen Regelfläche an der Gelenkkugel, welche mit einem an dem Gehäuse des Kugelgelenks vorgesehenen Regelelement in Anlage steht und zusammenwirkt bzw. in Wirkverbindung steht, erzielt.

In DE 20 2011 103 345 U1 ist ebenfalls ein gattungsgemäßes Kugelschwenkmodul offenbart.
In der DE 10 2009 045 290 A1 ist ein sogenanntes Taumelkugelgelenk offenbart, wobei ebenfalls mittels einer Regelfläche an der Gelenkkugel eine Zwangsführung des Kugelzapfens eine Verdrehung um seine Längsachse bewirkt, bei welcher gleichzeitig eine seitliche Auslenkung des Kugelzapfens erfolgt. Zusätzlich ist ein Antrieb mittels Kegelrädern vorgesehen, die in die zum Teil verzahnte Regelfläche an der Gelenkkugel eingreifen und die Bewegung des Zapfens gegenüber dem Gelenkgehäuse ermöglichen.

Jedoch handelt es sich bei den bekannten Anhängerkupplungen lediglich um halbautomatische Lösungen. Nach einer elektrischen oder auch mechanischen Entriegelung muss der Bediener hierbei immer noch den Anhängerhaken per Hand in seine Betriebsposition bringen. Ebenso muss beim Einfahren des Hakens dieser per Hand hinter die Schürze bzw. die Stoßstange geklappt oder manuell in seine Ruheposition gebracht werden.

Aus der EP 2 017 097 A1 ist bekannt, eine sogenannte Kugelstange für eine Kfz-Anhängerkupplung, die mittels einer Bahnsteuerung zwangsgeführt ist, motorisch zu bewegen, wobei die genaue Realisierung dieser Bewegung nicht thematisiert wird.

Daher ist es eine Aufgabe der vorliegenden Erfindung, ein Kugelschwenkmodul für eine Anhängerkupplung der zuvor beschriebenen Art bereitzustellen, das eine sichere, praxistaugliche und vollautomatische Funktionsweise bietet.

Diese Aufgabe wird durch ein Kugelschwenkmodul mit den Merkmalen gemäß Anspruch 1 gelöst. Bevorzugte Ausführungsformen der Erfindung sind in den abhängigen Ansprüchen definiert.

Es wird ein Kugelschwenkmodul, insbesondere für eine Anhängerkupplung, bereitgestellt, welches einen eine Gelenkkugel aufweisenden Kugelzapfen aufweist, wobei ein Gehäuse um die Gelenkkugel schwenkbar gelagert ist, wobei die Gelenkkugel eine Regelfläche, insbesondere eine nicht ebene Regelfläche, aufweist, die mit mindestens einem in dem Gehäuse vorgesehenen Riegelelement in Wirkverbindung steht, so dass mittels der Regelfläche eine Zwangsführung des Gehäuses gegenüber dem Kugelzapfen bewirkt ist, bei welcher das Gehäuse bei einer Bewegung zwischen einer Betriebsposition und einer Ruheposition um eine Drehachse und um eine Kippachse geschwenkt wird, wobei ein Motor, insbesondere ein Elektromotor, vorgesehen ist, welcher die Bewegung zwischen der Betriebsposition und der Ruheposition bewirkt. Zum Durchführen der Schwenkbewegung des Gehäuses gegenüber dem Kugelzapfens ist ein mit dem Motor verbundener Schwenkantrieb vorgesehen, welcher ein in eine Antriebswelle eingreifendes erstes Zahnrad aufweist, wobei das erste Zahnrad auf dem Kugelzapfen drehbar gelagert ist.

Unter einer nicht ebenen Regelfläche ist eine an der Kugel des Kugelzapfens vorhandene Fläche zu verstehen, die nicht in einer einzigen Ebene liegt. Die Regelfläche kann z.B. aus zwei sich schneidende Ebenen bestehen, die in einem stumpfen Winkel zueinander stehen, ist jedoch nicht darauf beschränkt. Die Ebenen können bzw. die nicht ebene Regelfläche kann durch mechanische Bearbeitung der Kugel oder durch Kaltpressen an der Kugel entstehen bzw. angearbeitet werden. Bevorzugt definiert die Formgebung der nicht ebenen Regelfläche eine räumliche Bewegungsbahn, entlang welcher sich das Gehäuse bzw. der damit verbundene Anhängerhaken (bzw. die an dessen äußeren Ende befindliche Kupplungskugel) bewegen kann, wenn dieses um die die des Gehäuses bzw. um die Längsachse des Kugelzapfens gedreht wird. Über die Formgebung der Regelfläche wird insbesondere eine Abhängigkeit zwischen einer Verdrehung des Gehäuses um die Längsachse des Kugelzapfens und einer seitlichen Auslenkung des Gehäuses um wenigstens eine andere Achse (Kippachse) geschaffen, die schräg oder senkrecht zu der Längsachsachse des Kugelzapfens ausgerichtet ist. Bevorzugt schneidet die wenigstens eine Kippachse die Längsachse des Kugelgelenks, wobei der Schnittpunkt vorzugsweise im Zentrum der Gelenkkugel liegt. Insbesondere zwingt das Zusammenwirken von Regelfläche und Regelelement den Kugelzapfen bei einer Verdrehung um seine Längsachse zu einer seitlichen Auslenkung.

Die erfindungsgemäße Konfiguration ermöglicht die platzsparende Schwenk-Kipp-Bewegung des Anhängerhakens, wenn dieser mit dem Gehäuse des Kugelschwenkmoduls kraft-, form- und/oder stoffschlüssig verbunden ist. Die Schwenk-Kippbewegung ist darüber hinaus mittels eines Motors bewirkt, so dass ein maximaler Komfort bei der Bedienung der Anhängerkupplung geboten werden kann. Eine mechanische bzw. manuelle Bedienung durch einen Anwender (von Hand), um die Anhängerkupplung von der Betriebsposition in die Ruheposition oder umgekehrt zu schwenken, ist nicht erforderlich. Die kombinierte Schwenk-Kipp-Bewegung um zumindest zwei Raumachsen wird allein durch den Motor bzw. den Schwenkantrieb ausgeführt und kann beispielsweise per Knopfdruck durch Betätigen beispielsweise eines elektrischen Schalters oder Tasters ausgelöst bzw. betrieben werden. Als Motor kann neben einem Elektromotor ein hydraulischer oder ein pneumatischer Motor oder eine zum Antrieb der Antriebswelle bzw. des Schwenkantriebs geeignete Kraftquelle eingesetzt werden.
Vorzugsweise kann das Regelelement als Zwangsführungsstift ausgebildet sein, wobei der Stift tonnenförmig wie ein Zylinderstift ausgebildet sein kann. In diesem Fall steht die Regelfläche des Kugelzapfens mit dem Zwangsführungsstift in Wirkverbindung und bewirkt die Zwangsführung des Gehäuses gegenüber der Kugel des Kugelzapfens. Aus einer Drehbewegung des Gehäuses gegenüber dem Kugelzapfens resultiert somit eine Dreh- und Kippbewegung des Gehäuses, die teilweise oder ganz überlagert sein kann.

Gemäß einer weiteren bevorzugten Ausführungsform ist das erste Zahnrad als Teilzahnrad ausgebildet. Da für die Ein- und Ausschwenkbewegung lediglich eine Drehung um etwa 180° notwendig ist, ist eine Teilve rzahnung über einen Bereich von vorzugsweise 210°bis 250°ausreichend. Um sicherzu stellen, dass die Zähne des ersten Zahnrads immer in Eingriff mit der Antriebswelle sind, ist der Bereich der Verzahnung am ersten Zahnrad jedoch vorzugsweise etwas weiter ausgedehnt als der oben genannte ausreichende Bereich der Teilverzahnung. Die Verwendung einer Teilverzahnung ist im Hinblick auf den Bauraum vorteilhaft, da das Zahnrad im Durchmesser kleiner gewählt werden kann. Eine Anordnung der Zähne um den gesamten Umfang des ersten Zahnrads, das heißt über 360° würde den Durchmesser entsprechend vergrößern. Vorteilhaft im Hinblick auf die Herstellungskosten ist es weiterhin, wenn das teilverzahnte erste Zahnrad anstelle einer spanenden Bearbeitung eines Vollmaterials aus einem Sintermaterial oder alternativ nach entsprechender Dimensionierung auch aus Kunststoff oder aus Leichtmetall oder anderen kostengünstigen Materialien hergestellt ist.

Vorzugsweise ist an dem ersten Zahnrad ein Mitnehmerstift vorgesehen. Der Mitnehmerstift ist dabei fest an dem ersten Zahnrad angeordnet und greift in eine entsprechende Aufnahmeeinrichtung an dem Verschlussring ein. Die Aufnahmeeinrichtung kann als Bohrung oder Loch, insbesondere Sackloch ausgebildet sein. Insbesondere in dieser vorzugsweisen Ausführungsform, welche einen Mitnehmerstift an dem ersten Zahnrad umfasst, ist es vorteilhaft, ein erstes Zahnrad mit Teilverzahnung einzusetzen. Da die Teilverzahnung den Bereich des Mitnehmerstiftes aussparen kann, entstehen hierdurch Bauraumvorteile. Eine Vollverzahnung würde den Durchmesser vergrößern.

Gemäß noch einer weiteren bevorzugten Ausführungsform ist die Antriebswelle eine Zahnwelle, insbesondere eine Zweizahnwelle mit einem zum ersten Zahnrad achsparallelen Antrieb. Es ist vorteilhaft, wenn die Zahnwelle, welche das erste Zahnrad in eine Drehbewegung versetzt, eine Zahnwelle mit geringer Anzahl der Zähne, beispielsweise zwei oder drei Zähne, ist, da durch die geringe Anzahl der Zähne eine hohe Untersetzung erreicht werden kann. Beispielsweise kann das Verhältnis der Anzahl der Zähne der Zweizahnwelle zu der Anzahl der Zähne des ersten Zahnrads 2:20 bis 2:50, vorzugsweise 2:32 betragen, so dass aufgrund des günstigen Übersetzungsverhältnisses ein Motor mit geringem Drehmoment verwendet werden kann. Bei einem derartigen Motor ist von einem geringen Bauraum auszugehen. Zudem kann die Zahnwelle beispielsweise im Gegensatz zu einem Schneckenantrieb axial versetzt zu dem Kugelzapfen angeordnet sein, wohingegen bei dem Schneckenantrieb die Achsen meist um 90° zueinander versetzt sind. Im Falle der Zahnwelle kann daher die Antriebseinheit kompakter gebaut werden. Zudem ist es im Hinblick auf eine anzustrebende Abdichtung vorteilhaft, eine Zahnwelle zu verwenden, da die komplette Antriebseinheit - jedoch ohne Motoren - durch einen Dichtungsbalg abdichtbar ist und keine zusätzlichen Abdichtkonzepte beispielsweise für die Antriebswellen bereitgestellt werden müssen.

Vorzugsweise sind die Antriebswelle, welche die Drehbewegung auf das erste Zahnrad überträgt, und das erste Zahnrad jeweils drehbar um ihre Mittelachsen und ansonsten ortsfest, das heißt mit einer festen Drehachse gelagert. Dies gestattet eine Lagerung des ersten Zahnrads und der Antriebswelle auf übliche Weise mit geringem konstruktivem Aufwand.

Gemäß einer weiteren bevorzugten Ausführungsform ist an dem ersten Zahnrad ein Verschlussring als obere Abdeckung des Gehäuses angeordnet, welcher zusammen mit dem Gehäuse um die Kugel des Kugelzapfens sowohl um die Drehachse als auch um die Kippachse schwenkbar ist.

Gemäß einer weiteren bevorzugten Ausführungsform ist der Verschlussring dazu ausgebildet, um einerseits eine Drehbewegung des ersten Zahnrads um die Drehachse auf das Gehäuse zu übertragen und andererseits eine Kippbewegung des Gehäuses um die Kippachse von der Antriebswelle zu entkoppeln. Die Drehbewegung wird von dem Elektromotor über die Antriebswelle, das erste Zahnrad und den Mitnehmerstift auf den Verschlussring und somit auf das Gehäuse übertragen. Auf Grund der Wirkverbindungzwischen der Regelfläche und dem Regelelement resultiert eine Kippbewegung zwischen Kugelzapfen und Gehäuse. Diese Kippbewegung des Gehäuses und des Verschlussrings überträgt sich jedoch nicht auf das Zahnrad und damit auch nicht auf die Antriebswelle.

Weiterhin ist es von Vorteil, wenn der Verschlussring mit einer Aufnahmeeinrichtung versehen ist, in welcher der Mitnehmerstift bei einer Kippbewegung des Gehäuses und damit des Verschlussrings mit variabler Eintauchtiefe aufnehmbar ist. Dadurch überträgt sich die Kippbewegung des Verschlussrings nicht auf den Mitnehmerstift, da dieser mehr oder weniger tief in die Aufnahmeeinrichtung eintauchen kann. Durch die derart hergestellte, insbesondere formschlüssige Verbindung zwischen dem Mitnehmerstift und dem Verschlussring erfolgt somit eine Kopplung hinsichtlich der Drehbewegung des ersten Zahnrads und gleichzeitig eine Entkopplung hinsichtlich der Kippbewegung des Verschlussrings. Die Drehbewegung selbst wird über den Verschlussring auf das Gehäuse übertragen

Vorteilhafterweise ist die Aufnahmeeinrichtung auf dem Verschlussring um etwa 90°versetzt zu der Kippachse des Gehäuses angeordnet, D. h. eine Verbindungslinie zwischen Aufnahmeeinrichtung und Mittelpunkt des ersten Zahnrads steht senkrecht zu der Kippachse des Gehäuses. Somit ist die Aufnahmeeinrichtung in einer Draufsicht auf das Zahnrad entlang der Mittelachse um eine Viertel Kreisdrehung von der Kippachse entfernt. Da beim Antrieb eine zumindest teilweise überlagerte Dreh- und Kippbewegung des Schwenkmoduls ausgeführt wird, muss die Antriebseinheit, welche die Drehbewegung bewirkt, zusätzlich die Entkopplung der Kippbewegung vom Antrieb ermöglichen. Dies wird vorzugsweise dadurch erreicht, dass die Aufnahmeeinrichtung um die genannten etwa 90°, vorzugsweise genau 90° gedreht zur Kippac hse auf dem Verschlussring angeordnet ist. Durch diese 90°-Anordnung kann der Mitnehmerstift in der Aufnahmeeinrichtung auf und ab bewegt werden, wobei seine Eintauchtiefe variiert, ohne dabei zu verkanten.

Vorteilhaft kann in diesem Zusammenhang sein, wenn zum Verriegeln und Entriegeln des Kugelschwenkmoduls in dem Kugelzapfen eine Spindel vorgesehen ist, welche in dem Kugelzapfen linear auf und ab bewegbar ist. Vorzugsweise ist weiterhin ein Spindelantrieb vorgesehen, welcher ein zweites Zahnrad mit einem Innengewinde, insbesondere ein Trapezgewinde, umfasst, welches an einem Ende des Kugelzapfens drehbar gelagert ist. Gemäß einer bevorzugten Ausführungsform weist die Spindel ein Außengewinde auf, welches in das Innengewinde des zweiten Zahnrads eingreift. Wenn ein Drehfreiheitsgrad der Spindel blockiert wird, bewegt sich die Spindel bei einer Drehung des zweiten Zahnrads linear entlang der Drehachse des Zahnrads auf und ab. Durch diese Bewegung verriegelt bzw. entriegelt die Spindel das Verriegelungssystem über Drücken und Ziehen eines Sperrbolzens. Diese Blockierung kann zum Beispiel durch eine Führung, welche in einem Motorgehäuse angeordnet ist, welches hinter einem Verbinder, der zur Anbindung des Kugelzapfens an zum Beispiel einem Querrohr bzw. Querträger eines Autos dient, angebracht ist oder durch eine Arretierung. Ein Sensor, Schalter oder Taster kann dabei in einer bevorzugten Ausführungsform die Position der Spindel abfragen. Bei einer definierten Eintauchtiefe der Spindel in den Kugelzapfen kann dadurch ein sicherer Verriegelungszustand erkannt werden. Erst wenn dieser Zustand erreicht ist, wird ein vollständiges Verriegeln beispielsweise durch ein optisches oder ein akustisches Signal signalisiert. Der Sensor kann als ein berührungslos arbeitender Magnetsensor oder Hallsensor oder auch als Induktivsensor ausgebildet sein. Die Abfrage des Sensors geschieht vorzugsweise über ein Steuergerät des Kugelschwenkmoduls, das den gesamten Ablauf des schwenkangetriebenen Kugelschwenkmoduls steuert und kontrolliert. Hierbei werden über die vorgenannten Sensortypen Betriebs- und Ruheposition erfasst und in Abhängigkeit davon die Ent- bzw. Verriegelung ausgelöst.

Ein weiterer Vorteil wird dadurch erzielt, dass an dem Gehäuse eine Dichtung in Form eines Dichtungsbalges angeordnet ist, wobei die Dichtung das Gehäuse an seinem äußeren radialen Umfang vollständig umgibt und an einer Unterseite des Gehäuses das Gehäuse zumindest teilweise untergreift. Dadurch, dass die Dichtung das Gehäuse an der Unterseite untergreift, kann sie mit an der Unterseite des Gehäuses angebrachten weiteren Bauteilen in flächigem Kontakt gelangen und durch diese an das Gehäuse angepresst werden, so dass eine umlaufende Abdichtung bewirkt ist.

Weiterhin vorteilhaft ist, wenn die Dichtung radial das komplette Gehäuse umgreift. Dies macht ein Vorsehen einer zusätzlichen Beschichtung des Gehäuses zu Korrosionsschutzzwecken überflüssig.

In einer weiteren vorzugsweisen Ausführungsform weist die Dichtung in einem oberen Bereich einen flexiblen Abschnitt, vorzugsweise einen gewellten Balgabschnitt, auf. Der flexible Abschnitt stellt eine ausreichende Flexibilität für die Kippbewegung des Kugelschwenkmoduls sicher. Die vorteilhafte Ausführung als gewellter Balgabschnitt ermöglicht den Einsatz bekannter Werkstoffe und Fertigungsprozeduren.

Vorzugsweise ist die Dichtung an dem oberen Ende, an welchem sich der gewellte Balgabschnitt befindet, mit dem Kugelzapfen und/oder dem Verbinder drehbar verbunden, insbesondere mittels eines an einem oberen Ende der Dichtung angeordneten Laufrings. Es kann zwischen Kugelzapfen und Laufring zusätzlich ein Zwischenring vorgesehen sein, der insbesondere auf diesen aufgepresst ist, und auf dem das erste Zahnrad drehbar angeordnet sein kann.. Der Dichtungsbalg ist dabei drehbar um den Laufring angeordnet bzw. gleitet auf diesem.

Im Nachfolgenden werden Ausführungsformen der Erfindung unter Bezugnahme auf die beigefügte Zeichnung näher beschrieben. Es zeigen:
Fig. 1 eine Ansicht einer Anhängerkupplung mit dem Schwenkmodul gemäß einer Ausführungsform;
Fig. 2 eine perspektivische und teilweise geschnittene Ansicht eines Kugelschwenkmoduls gemäß dem Stand der Technik;
Fig. 3 eine perspektivische und teilweise geschnittene Ansicht eines Kugelschwenkmoduls gemäß einer Ausführungsform;
Fig. 4 eine perspektivische und teilweise geschnittene Ansicht einer Anhängerkupplung mit dem in Figur 3 dargestellten Kugelschwenkmodul;
Fig. 5A - 5E Ansichten der Bauteile einer Antriebseinheit für das in Figur 3 dargestellte Kugefschwenkmodul;
Fig. 6 eine perspektivische und teilweise geschnittene Ansicht des in Figur 3 dargestellten Kugelschwenkmoduls zur Erläuterung der Schwenkbewegung;
Fig. 7 eine perspektivische Ansicht des in Figur 3 dargestellten Kugelschwenkmoduls;
Fig. 8A - 8C weitere Ansichten des in Figur 3 dargestellten Kugelschwenkmoduls zur Erläuterung der Abdichtung; und
Fig. 9 einen Schnitt durch das in Figur 3 dargestellte Kugelschwenkmodul zur Erläuterung einer Ver- und Entriegelungsfunktion.

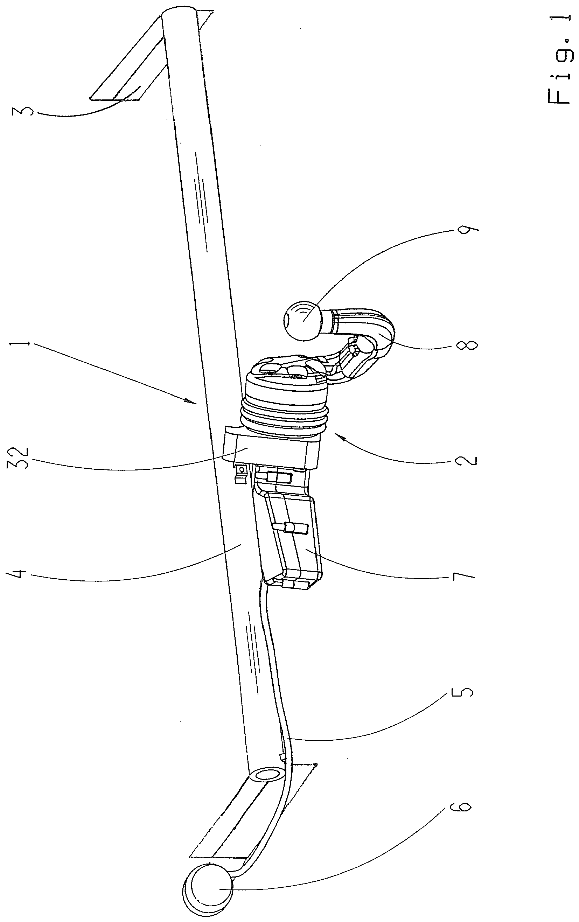

Fig. 1 ist eine perspektivische Ansicht einer Anhängerkupplung 1 mit einem Kugelschwenkmodul 2 gemäß einer Ausführungsform. Die Anhängerkupplung 1 ist an einem Querrohr 4 angeordnet, an welchem ebenfalls eine Längsanbindung 3 zur Anbringung an einem Fahrzeug vorgesehen ist sowie Kabel 5 und Stecker 6, um einen ebenfalls an dem Querrohr 4 angeordneten Elektromotor 7 mit Energie zu versorgen. Zwischen dem Elektromotor 7 und dem Schwenkmodul 2 ist ein Verbinder 32 zum Verbinden der beiden Bauteile angeordnet. Weiterhin ist an dem Schwenkmodul 2 ein daran angeschraubter Anhängerhaken 8 mit einer Kupplungskugel 9 vorgesehen. Der Elektromotor 7 sorgt für die Schwenkbewegung der Anhängerkupplung 1 sowie für die Entriegelung und Verriegelung.

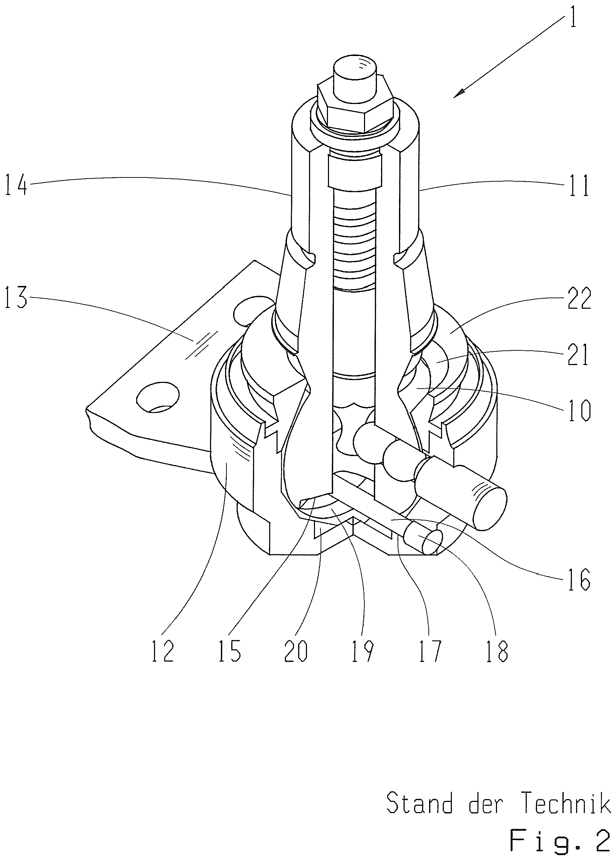

Fig. 2 zeigt eine perspektivische und teilweise geschnittene Ansicht eines Kugelschwenkmoduls 2 gemäß dem Stand der Technik. Ein mit einer Gelenkkugel 10 versehener Kugelzapfen 11 ist in einem Gehäuse 12 drehbar und schwenkbar gelagert. An dem Gehäuse 12 ist ein Flansch 13 vorgesehen, mittels welchem der Anhängerhaken 8 mit dem Gehäuse 12 befestigbar ist. Der Kugelzapfen 11 weist einen fest mit der Gelenkkugel 10 verbundenen Gewindezapfen 14 auf, und erstreckt sich aus dem Gehäuse 12 heraus. An der Gelenkkugel 10 ist an der dem Gewindezapfen 14 abgewandten Seite eine Regelfläche 15 vorgesehen, die eine Stirnfläche des Kugelzapfens 11 bildet. Die Regelfläche 15 ist nicht eben und liegt an einem Zwangsführungsstift 16 an, der in einer im Gehäuse 12 vorgesehenen Bohrung 17 angeordnet ist und mittels Gleitlagerbuchsen 18 um seine Längsachse drehbar an dem Gehäuse 12 gelagert ist. Der Zwangsführungsstift 16 fungiert als Regelelement und wirkt mechanisch mit der Regelfläche 15 zusammen (Wirkverbindung). Der Kugelzapfen 11 ist in üblicher Weise unter Zwischenschaltung einer Kugelschale 19 in einem Innenraum 20 des Gehäuses 12 gelagert, der über eine oval ausgebildete Zapfenöffnung 21 des Verschlussringes 22 zugänglich ist, durch welche sich der Kugelzapfen 11 hindurch erstreckt. Das Gehäuse 12 ist durch einen Verschlussring 22 verschlossen. Das Gehäuse 12 wird durch das Zusammenwirken von der Regelfläche 15 und dem Zwangsführungsstift 16 einerseits und durch die ovale Zapfenöffnung 21 andererseits derart zwangsgeführt, dass dieses sich relativ zu dem Kugelzapfen 11 lediglich entlang einer vordefinierten Bewegungsbahn bewegen kann, und so eine überlagerte Dreh-/Kippbewegung bewirkt. Die vorgenannte Betrachtung geht davon aus, dass der Kugelzapfen 11 ortsfest, z.B. an einem Querrohr, insbesondere unter Zwischenschaltung eines Verbinders, an einem Fahrzeugheck angeordnet ist. Anders betrachtet wird der Kugelzapfen gegenüber dem Gehäuse zwangsgeführt, wenn das Gehäuse ortsfest angeordnet ist.

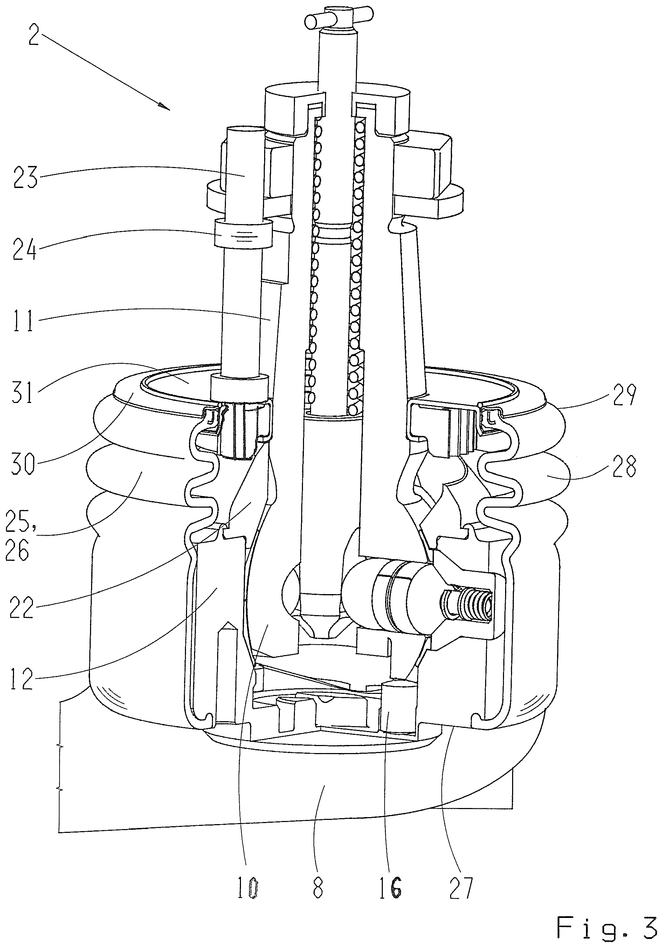

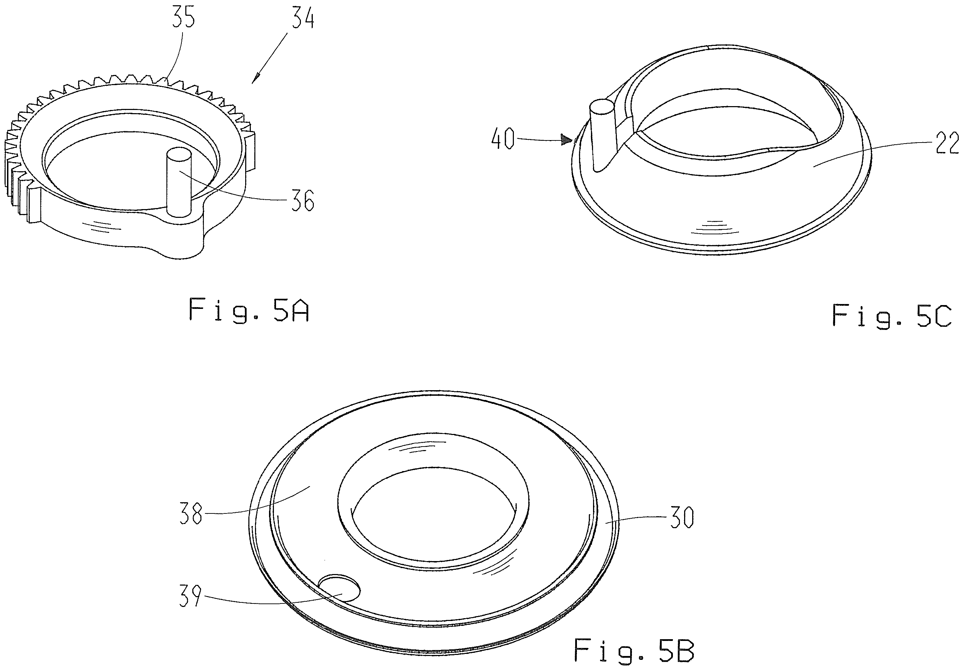

Fig. 3 zeigt eine perspektivische und teilweise geschnittene Ansicht eines Kugelschwenkmoduls 2 gemäß einer Ausführungsform. Im Gegensatz zu der in Figur 2 gezeigten Ausführungsform aus dem Stand der Technik ist hier ein Schwenkantrieb 23 vorgesehen, welcher in Zusammenhang mit den Figuren 5A bis 5E noch näher beschrieben werden wird. Der Schwenkantrieb 23 ist in einer Lagerbuchse 24 gelagert. Weiterhin ist das Gehäuse 12 in einer Dichtung 25 angeordnet, die hier als Dichtungsbalg 26 mit einem Balgabschnitt 28 ausgebildet ist, um Flexibilität für eine Kippbewegung des Kugelschwenkmoduls 2 vorzusehen. Der Dichtungsbalg 26 untergreift das Gehäuse 12 an dessen Unterseite 27 und umschließt den seitlichen Umfang des Gehäuses 12 komplett. Weiterhin ist der Dichtungsbalg 26 mit dem Kugelzapfen 11 drehbar verbunden, indem an einem oberen Ende 29 der Dichtung 25 ein Laufring 30 vorgesehen ist auf dem der Rand des Dichtungsbalges sich drehen kann. Der Laufring 31 ist auf den Zwischenring 31 aufgepresst, der drehfest auf dem Kugelzapfen angeordnet ist.

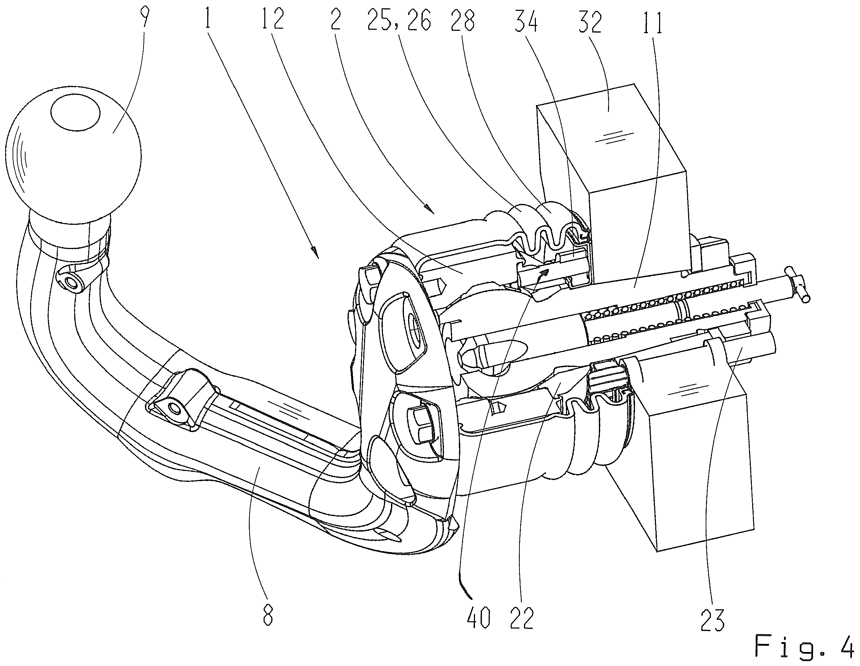

Fig. 4 zeigt eine perspektivische und teilweise geschnittene Ansicht einer Anhängerkupplung 1 mit dem in Figur 3 dargestellten Kugelschwenkmodul 2, wobei sich an das hier in der Figur linke Ende des Kugelschwenkmoduls 2 der Anhängerhaken 8 anschließt. Der Anhängerhaken weist eine Kupplungskugel 9 auf und ist mit dem Kugelzapfen 11 mit dem Verbinder 32 verbunden. Gemäß Figur 1 ist der Verbinder 32 mit dem Querrohr 4 verschweißt.

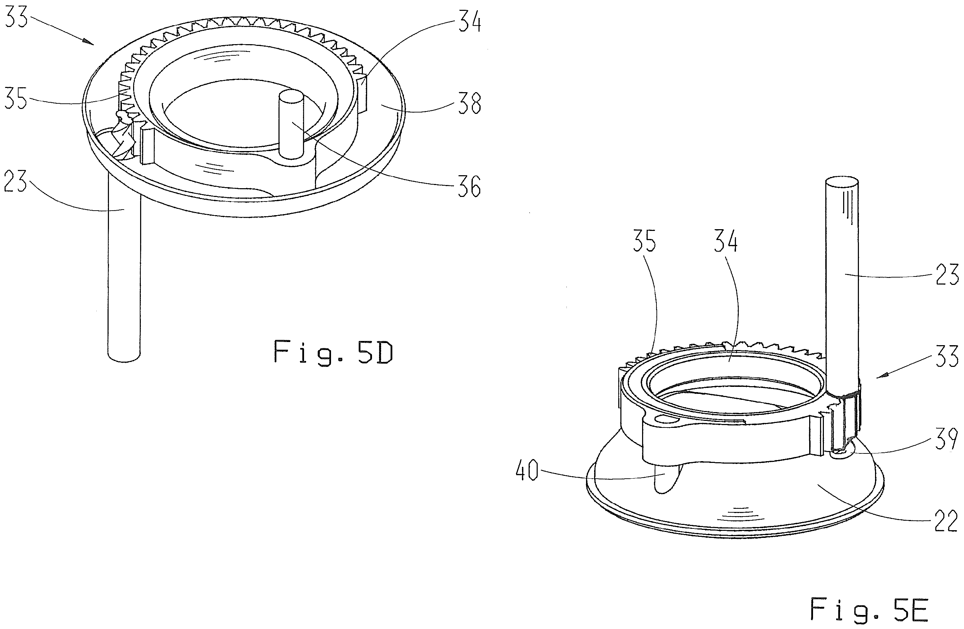

Fig. 5A bis 5E zeigen perspektivische Ansichten der Bauteile einer Antriebseinheit 33 für das in Figur 3 dargestellte Kugelschwenkmodul 2. Die in Figur 5D dargestellte Antriebseinheit 33 umfasst ein erstes Zahnrad 34, welches mit einer Teilverzahnung mit Zähnen 35 ausgebildet ist. An dem ersten Zahnrad 34 ist in einem Bereich ohne Zähne ein Mitnehmerstift 36 fest angeordnet, dargestellt in Figur 5A. Der Mitnehmerstift 36 ist im ersten Zahnrad 34 eingepresst und wirkt als Mitnehmer für einen Verschlussring 22, welcher das Gehäuse 12 (siehe Figur 3) an einer Seite verschließt. Das erste Zahnrad 34 ist drehbar in einem Zwischenring 38 gelagert, welcher auf dem Kugelzapfen 11 (siehe Figur 3) des Kugelschwenkmoduls 2 aufgepresst ist und damit ortsfest ist. Weiterhin ist in Figur 5B der Laufring 30 dargestellt, über welchen die Dichtung 25 drehbar mit dem Gehäuse 12 verbunden ist (siehe Figur 3). In Figur 5C ist der Verschlussring 22 dargestellt. Der Verschlussring 22 weist darüber hinaus eine Aufnahmeeinrichtung 40 auf, in welche der Mitnehmerstift 36 in zusammengebautem Zustand, welcher in Figur 5E dargestellt ist, aufnehmbar ist und in welcher der Mitnehmerstift 36 axial hin und her bewegbar ist. Der Zwischenring 38 ist mit einer Bohrung 39 versehen, dargestellt in Figur 5B. Durch die Bohrung 39 ist der Antrieb 23, welcher hier rein schematisch dargestellt ist, welcher jedoch als Zweizahnwelle ausgebildet ist, in zusammengebautem Zustand hindurchführbar, wie in Figur 5D erkennbar ist.

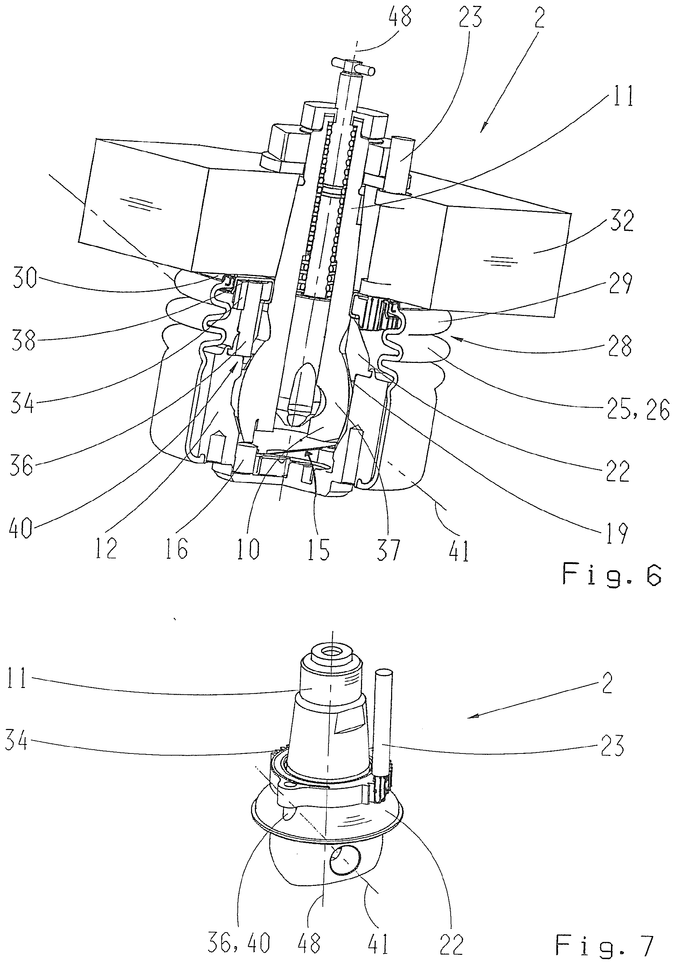

Fig. 6 ist eine perspektivische und teilweise geschnittene Ansicht des in Figur 3 dargestellten Kugelschwenkmoduls 2 zur Erläuterung der Schwenkbewegung. Der hier nicht dargestellte Elektromotor treibt die als Zweizahnwelle ausgebildete Antriebswelle 23 an. Die Antriebswelle 23 treibt das erste Zahnrad 34 an, welches auf dem Zwischenring 38 drehbar gelagert ist, an. Der Mitnehmerstift 36 ist fest mit dem ersten Zahnrad 34 verbunden. Durch die Drehung des ersten Zahnrads 34 wird der Mitnehmerstift 36 ebenfalls mitbewegt. Dieser wiederum greift in die Aufnahmeeinrichtung 40 des Verschlussrings 22 ein, wodurch anfänglich eine Rotationsbewegung des Gehäuses 12 erzeugt wird. Durch diese Bewegung wird der am Gehäuse befestigte Anhängerhaken 8 mitgedreht (siehe Figur 1). Das Gehäuse 12 führt im weiteren bedingt durch die nicht ebene Regelfläche 15 und die ovale, langlochförmige Öffnung in dem Verschlussring 22 um die Gelenkkugel 10 bzw. Kugel 37 des Kugelzapfens 11 sowohl eine Rotations- als auch eine Kippbewegung aus. Die Kippbewegung entsteht aus der übertragenen Rotationsbewegung durch die Anlage der nicht ebenen Regelfläche 15 am Zwangsführungsstift 16, welches hier als ein tonnenförmiger Zylinderstift ausgebildet ist (vergleiche Figur 2).

Die Rotationsbewegung wird, wie oben beschrieben, von dem Elektromotor über die Antriebswelle, das erste Zahnrad 34 und den Mitnehmerstift 36 auf den Verschlussring 22 übertragen. Da der Verschlussring fest mit dem Gehäuse verbunden ist wird die gesamte Bewegung somit auf das Gehäuse übertragen. Die Kippbewegung des Verschlussrings 22 überträgt sich jedoch nicht auf den Mitnehmerstift 36. Somit wird die Kippbewegung entkoppelt.

Fig. 7 ist eine perspektivische Ansicht des in Figur 3 dargestellten Kugelschwenkmoduls 2 mit einer Drehachse 48 und einer Kippachse 41. Wie hier erkennbar ist, ist der Mitnehmerstift 36 um 90° ver setzt zu der Kippachse 41 des Kugelschwenkmoduls 2 angeordnet. Hierdurch wird ermöglicht, dass eine Kippbewegung ausgeführt werden kann, ohne dass der Mitnehmerstift 36 in der Aufnahmeeinrichtung 40 verkantet, da er bei der Dreh-/Kippbewegung in diese ein-und austauchen kann.

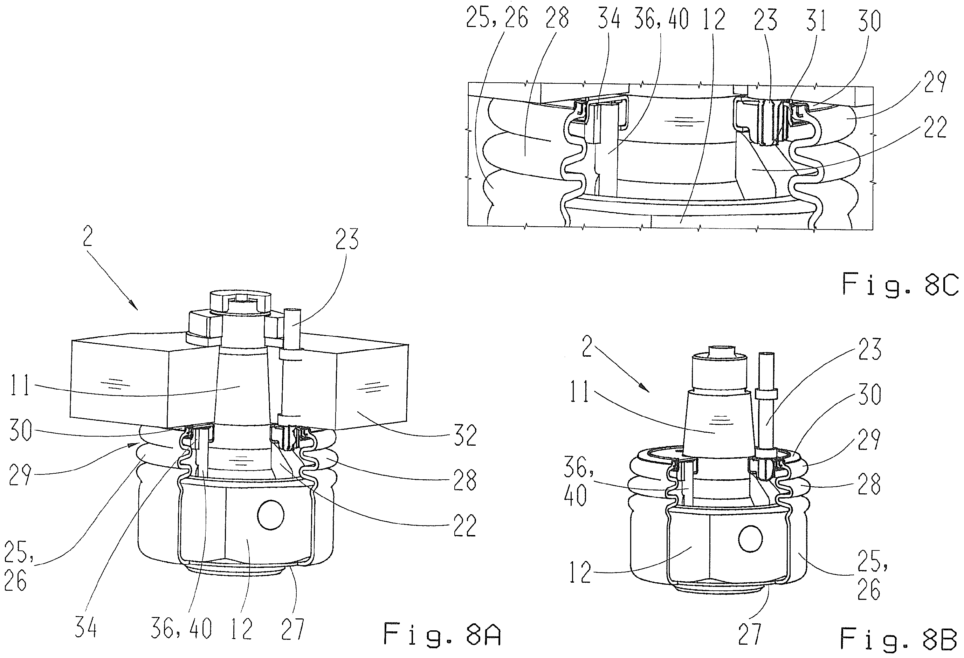

Fig. 8A bis 8C zeigen weitere Ansichten des in Figur 3 dargestellten Kugelschwenkmoduls 2 zur Erläuterung der Abdichtung. Wie in Figuren 8A und 8B erkennbar ist, umschließt die als Dichtungsbalg 26 ausgebildete Dichtung 25 das Gehäuse 12 an dessen seitlichem Umfang vollständig. An der Unterseite 27 des Gehäuses 12 untergreift die Dichtung 25 das Gehäuse 12. Wenn das Gehäuse 12 mit dem Anhängerhaken 8 (siehe Figur 4) verschraubt wird, wird die Dichtung 25 zwischen diesen Bauteil an die Unterseite 27 angepresst und eine sichere Abdichtung auf der gesamten Fläche sichergestellt. An dem oberen Ende 29 der Dichtung 25 ist diese mit dem Zwischenring 31 über den Laufring 30 drehbar verbunden. Durch die komplette Umschließung des Gehäuses 12 durch die Dichtung 25 kann eine zusätzliche Beschichtung des Gehäuses 12 zu Korrosionsschutzzwecken entfallen.

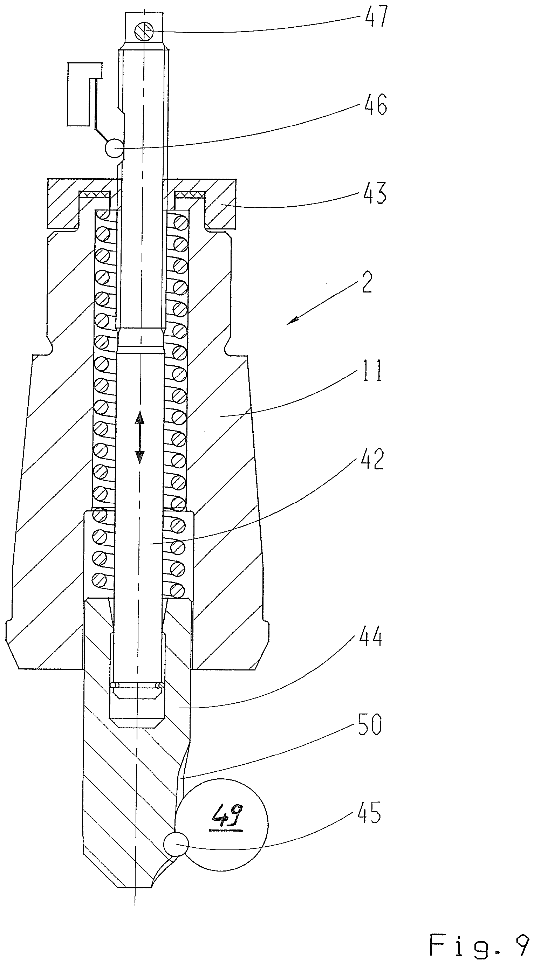

Fig. 9 zeigt einen Teilschnitt durch das in Figur 3 dargestellte Kugelschwenkmodul 2 zur Erläuterung einer Ver- und Entriegelungsfunktion. Um das System des Kugelschwenkmoduls 2 zu verriegeln und zu entriegeln, ist eine Spindel 42 vorgesehen, die sich linear in dem Kugelzapfen 11 auf und ab bewegen kann. Der Antrieb der Spindel 42 erfolgt über ein zweites Zahnrad 43, welches an einem Ende des Kugelzapfens 11 drehbar gelagert ist. Das zweite Zahnrad 43 besitzt ein hier nicht im Detail dargestelltes Innengewinde, insbesondere ein Trapezgewinde, welches zu einem ebenfalls nicht im Detail dargestellten Außengewinde der Spindel passt. Wenn nun der Drehfreiheitsgrad der Spindel 42 blockiert wird, z. B. durch eine Führung in dem hinter dem Verbinder 32 (siehe Figur 1) angebrachten Motorgehäuse, bewegt sich die Spindel 42 linear und verriegelt bzw. entriegelt das Verriegelungssystem über Drücken oder Ziehen eines Sperrbolzens 44 innerhalb des Kugelzapfens 11. Die Verriegelung des Kugelzapfens 11 gegenüber dem Gehäuse wird letztlich über eine schräge Verriegelungsfläche 50 erreicht, die Verriegelungselemente (Kugel 49 und weitere, hier nicht gezeigte Verriegelungselemente) senkrecht zur Längsachse des Kugelzapfens nach außen in ebenfalls nicht gezeigt Verriegelungstaschen im Gehäuse 12 bewegt. Ein Sensor fragt dabei die Position der Spindel 42 ab. Insbesondere wird bei der Drehung des zweiten Zahnrads 43 über dessen Innenverzahnung die Spindel 42 angetrieben, wobei ein Zylinderstift 47 ein Mitdrehen der Spindel 42 verhindert. Je nach Drehrichtung drückt die Spindel 42 den Sperrbolzen 44 in das Gehäuse 12 hinein oder heraus. Bei einer definierten Eintauchtiefe der Spindel 42 in den Kugelzapfen 11, d. h. an dem Punkt, an dem eine Sicherungsrille 45 des Sperrbolzens 44 die Kugel des Kugelzapfens 11 erreicht, kann dadurch ein sicherer Verriegelungszustand erkannt werden. Erst wenn dieser Zustand erreicht ist, wird ein vollständiges Verriegeln z. B. durch ein optisches oder ein akustisches Signal signalisiert. Bezugszeichen 46 kennzeichnet schematisch einen Schaltpunkt, an dem die Sicherungsrille 45 erreicht ist.

In der vorliegenden Konfiguration ist das Kugelzapfen fahrzeugfest angeordnet, so dass das Gehäuse mit dem Anhängerhaken schwenkt bzw. kippt. Wenn der Anhängerhaken alternative mit dem Kugelzapfen verbunden ist und dabei das Gehäuse fahrzeugfest angeordnet ist, ergibt sich hinsichtlich der platzsparenden Schwenk-Kipp-Möglichkeit des Anhängerhakens eine gleiche Funktionalität. In diesem Fall ist der Schwenkantrieb gehäuseseitig angeordnet, so dass der Motor bzw. Schwenkantrieb ein Schwenken bzw, Drehen/Kippen des Kugelzapfens bewirkt.

### Bezugszeichen

- 1: Anhängerkupplung
- 2: Schwenkmodul
- 3: Längsanbindung
- 4: Querrohr
- 5: Kabel
- 6: Stecker
- 7: Motor, Motorgehäuse
- 8: Anhängerhaken
- 9: Kupplungskugel
- 10: Gelenkkugel
- 11: Kugelzapfen
- 12: Gehäuse
- 13: Flansch
- 14: Gewindezapfen
- 15: Regelfläche
- 16: Zwangsführungsstift
- 17: Bohrung
- 18: Gleitlagerbuchse
- 19: Kugelschale
- 20: Innenraum
- 21: Zapfenöffnung
- 22: Verschlussring
- 23: Antrieb
- 24: Lagerbuchse
- 25: Dichtung
- 26: Dichtungsbalg
- 27: Unterseite des Gehäuses
- 28: Balgabschnitt
- 29: oberes Ende der Dichtung
- 30: Laufring
- 31: Zwischenring
- 32: Verbinder
- 33: Antriebseinheit
- 34: erstes Zahnrad
- 35: Zähne
- 36: Mitnehmerstift
- 37: Kugel
- 38: Zwischenring
- 39: Bohrung
- 40: Aufnahmeeinrichtung
- 41: Kippachse
- 42: Spindel
- 43: zweites Zahnrad
- 44: Sperrbolzen
- 45: Sicherungsrille
- 46: Schaltpunkt
- 47: Zylinderstift
- 48: Drehachse
- 49: Verriegelungselement (Kugel)
- 50: Verriegelungsfläche

## Patentansprüche

1. Kugelschwenkmodul (2), insbesondere für eine Anhängerkupplung (1), welches einen eine Gelenkkugel (10) aufweisenden Kugelzapfen (11) aufweist, wobei ein Gehäuse (12) um die Gelenkkugel (10) schwenkbar gelagert ist, wobei die Gelenkkugel (10) eine Regelfläche (15), insbesondere eine nicht ebene Regelfläche, aufweist, die mit mindestens einem in dem Gehäuse (12) vorgesehenen Regelelement (16) in Wirkverbindung steht, so dass mittels der Regelfläche (15) eine Zwangsführung des Gehäuses (12) gegenüber dem Kugelzapfen (11) bewirkt ist, bei welcher das Gehäuse (12) bei einer Bewegung zwischen einer Betriebsposition und einer Ruheposition um zumindest eine Drehachse (48) und um zumindest eine Kippachse (41) geschwenkt wird, wobei ein Motor (7), insbesondere ein Elektromotor, vorgesehen ist, welcher die Bewegung zwischen der Betriebsposition und der Ruheposition bewirkt, **dadurch gekennzeichnet,**
**dass** zum Durchführen der Schwenkbewegung des Gehäuses gegenüber dem Kugelzapfen ein mit dem Motor (7) verbundener Schwenkantrieb vorgesehen ist, welcher ein in eine Antriebswelle (23) eingreifendes erstes Zahnrad (34) aufweist, wobei das erste Zahnrad (34) auf dem Kugelzapfen (11) drehbar gelagert ist.

2. Kugelschwenkmodul (2) gemäß Anspruch 1, **dadurch gekennzeichnet, dass** das erste Zahnrad (34) als Teilzahnrad ausgebildet ist.

3. Kugelschwenkmodul (2) gemäß einem der Ansprüche 1 oder 2, **dadurch gekennzeichnet, dass** an dem ersten Zahnrad (34) ein Mitnehmerstift (36) vorgesehen ist.

4. Kugelschwenkmodul (2) gemäß Anspruch 1 bis 3, **dadurch gekennzeichnet, dass** die Antriebswelle (23) eine Zahnwelle, insbesondere eine Zweizahnwelle, ist.

5. Kugelschwenkmodul (2) gemäß einem der Ansprüche 1 bis 4, **dadurch gekennzeichnet, dass** die Antriebswelle (23) und das erste Zahnrad (34) drehbar um ihre jeweiligen Mittelachsen gelagert sind.

6. Kugelschwenkmodul (2) gemäß einem der Ansprüche 1 bis 5, **dadurch gekennzeichnet, dass** an dem ersten Zahnrad (34) ein Verschlussring (22) angeordnet ist, welcher zusammen mit dem Gehäuse (12) sowohl um die Drehachse (48) als auch um die Kippachse (41) schwenkbar ist.

7. Kugelschwenkmodul (2) gemäß Anspruch 6, **dadurch gekennzeichnet, dass** der Verschlussring (22) ausgebildet ist, um eine Drehbewegung des ersten Zahnrads (34) auf das Gehäuse (12) um die Drehachse (48) zu übertragen und eine Kippbewegung des Gehäuses (12) um die Kippachse (41) von der Antriebswelle zu entkoppeln.

8. Kugelschwenkmodul (2) gemäß Anspruch 6 oder 7, **dadurch gekennzeichnet, dass** der Verschlussring (22) mit einer Aufnahmeeinrichtung (40) versehen ist, in welcher der Mitnehmerstift (36) mit variabler Eintauchtiefe aufnehmbar ist, wobei die Aufnahmeeinrichtung (40) an dem Verschlussring (22) um 90°versetzt von der Kippachse (41) angeordnet ist.

9. Kugelschwenkmodul (2) gemäß einem der Ansprüche 1 bis 8, **dadurch gekennzeichnet, dass** zum Verriegeln und Entriegeln des Kugelschwenkmoduls (2) in dem Kugelzapfen (11) eine Spindel (42) vorgesehen, welche in dem Kugelzapfen (11) auf und ab bewegbar ist.

10. Kugelschwenkmodul (2) gemäß Anspruch 9, **dadurch gekennzeichnet, dass** ein Spindelantrieb zum Antreiben der Spindel (42) vorgesehen ist, welcher ein zweites Zahnrad (43) mit einem Innengewinde, insbesondere ein Trapezgewinde, umfasst, welches an einem Ende des Kugelzapfens (11) drehbar gelagert ist.

11. Kugelschwenkmodul (2) gemäß Anspruch 10, **dadurch gekennzeichnet, dass** die Spindel (42) ein Außengewinde aufweist, welches in das Innengewinde des zweiten Zahnrads (43) eingreift.

12. Kugelschwenkmodul (2) gemäß einem der Ansprüche 1 bis 11, **dadurch gekennzeichnet, dass** an dem Gehäuse (12) eine Dichtung (25) angeordnet ist, wobei die Dichtung (25) das Gehäuse (12) an seinem äußeren radialen Umfang vollständig umgibt und an einer Unterseite (27) des Gehäuses (12) das Gehäuse (12) zumindest teilweise untergreift.

13. Kugelschwenkmodul (2) gemäß Anspruch 12, **dadurch gekennzeichnet, dass** die Dichtung (25) einen flexiblen Abschnitt, vorzugsweise einen Balgabschnitt (28), aufweist, welcher eine Kippbewegung des Kugelschwenkmoduls (2) ermöglicht.

14. Kugelschwenkmodul (2) gemäß Anspruch 12 oder 13, **dadurch gekennzeichnet, dass** die Dichtung (25) mit dem Kugelzapfen und/oder Verbinder (12) drehbar verbunden ist, insbesondere mittels eines an einem oberen Ende (29) der Dichtung (25) angeordneten Laufrings (30).

## Claims

1. Ball pivoting module (2), in particular for a trailer coupling (1), which ball pivoting module (2) has a ball pivot (11) which has a joint ball (10), a housing (12) being mounted such that it can be pivoted about the joint ball (10), the joint ball (10) having a control surface (15), in particular a non-planar control surface, which is operatively connected to at least one control element (16) which is provided in the housing (12), with the result that positive guidance of the housing (12) with respect to the ball pivot (11) is brought about by means of the control surface (15), in the case of which positive guidance the housing (12) is pivoted about at least one rotational axis (48) and about at least one tilting axis (41) during a movement between an operating position and a rest position, a motor (7), in particular an electric motor, being provided which brings about the movement between the operating position and the rest position, **characterized in that** a pivot drive which is connected to the motor (7) is provided in order to carry out the pivoting movement of the housing with respect to the ball pivot, which pivot drive has a first gearwheel (34) which engages into a drive shaft (23), the first gearwheel (34) being mounted rotatably on the ball pivot (11).

2. Ball pivoting module (2) according to Claim 1, **characterized in that** the first gearwheel (34) is configured as a part gearwheel.

3. Ball pivoting module (2) according to either of Claims 1 and 2, **characterized in that** a driver pin (36) is provided on the first gearwheel (34).

4. Ball pivoting module (2) according to Claims 1 to 3, **characterized in that** the drive shaft (23) is a splined shaft, in particular a double-splined shaft.

5. Ball pivoting module (2) according to one of Claims 1 to 4, **characterized in that** the drive shaft (23) and the first gearwheel (34) are mounted such that they can be rotated about their respective centre axes.

6. Ball pivoting module (2) according to one of Claims 1 to 5, **characterized in that** a closure ring (22) is arranged on the first gearwheel (34), which closure ring (22) can be pivoted together with the housing (12) both about the rotational axis (48) and about the tilting axis (41).

7. Ball pivoting module (2) according to Claim 6, **characterized in that** the closure ring (22) is configured to transmit a rotational movement of the first gearwheel (34) to the housing (12) about the rotational axis (48) and to decouple a tilting movement of the housing (12) about the tilting axis (41) from the drive shaft.

8. Ball pivoting module (2) according to Claim 6 or 7, **characterized in that** the closure ring (22) is provided with a receiving device (40), in which the driver pin (36) can be received with a variable insertion depth, the receiving device (40) being arranged on the closure ring (22) such that it is offset by 90° from the tilting axis (41).

9. Ball pivoting module (2) according to one of Claims 1 to 8, **characterized in that** a spindle (42) which can be moved up and down in the ball pivot (11) is provided for locking and unlocking the ball pivoting module (2) in the ball pivot (11).

10. Ball pivoting module (2) according to Claim 9, **characterized in that** a spindle drive for driving the spindle (42) is provided, which spindle drive comprises a second gearwheel (43) with an internal thread, in particular a trapezoidal thread, which second gearwheel (43) is mounted rotatably at one end of the ball pivot (11).

11. Ball pivoting module (2) according to Claim 10, **characterized in that** the spindle (42) has an external thread which engages into the internal thread of the second gearwheel (43).

12. Ball pivoting module (2) according to one of Claims 1 to 11, **characterized in that** a seal (25) is arranged on the housing (12), the seal (25) surrounding the housing (12) completely on its outer radial circumference and engaging at least partially under the housing (12) on an underside (27) of the housing (12).

13. Ball pivoting module (2) according to Claim 12, **characterized in that** the seal (25) has a flexible section, preferably a bellows section (28), which makes a tilting movement of the ball pivoting module (2) possible.

14. Ball pivoting module (2) according to Claim 12 or 13, **characterized in that** the seal (25) is connected rotatably to the ball pivot and/or connector (12), in particular by means of a raceway (30) which is arranged at an upper end (29) of the seal (25).

## Revendications

1. Module de basculement de sphère (2), en particulier pour un attelage de remorque (1), qui présente un pivot à rotule (11) présentant une rotule d'articulation (10), dans lequel un boîtier (12) est monté de façon pivotante autour de la rotule d'articulation (10), dans lequel la rotule d'articulation (10) présente une face de réglage (15), en particulier une face de réglage non plane, qui est en liaison active avec au moins un élément de réglage (16) prévu dans le boîtier (12), de telle manière qu'un guidage forcé du boîtier (12) par rapport au pivot à rotule (11) soit opéré au moyen de la face de réglage (15), lors duquel le boîtier (12) est basculé par un mouvement entre une position de fonctionnement et une position de repos autour d'au moins un axe de rotation (48) et autour d'au moins un axe de basculement (41), dans lequel il est prévu un moteur (7), en particulier un moteur électrique, qui produit le mouvement entre la position de fonctionnement et la position de repos, **caractérisé en ce qu'**il est prévu, pour l'exécution du mouvement de basculement du boîtier par rapport au pivot à rotule, un entraînement de basculement relié au moteur (7), qui présente une première roue dentée (34) engrenant dans un arbre d'entraînement (23), dans lequel la première roue dentée (34) est montée de façon rotative sur le pivot à rotule (11).

2. Module de basculement de sphère (2) selon la revendication 1, **caractérisé en ce que** la première roue dentée (34) est réalisée sous forme de roue dentée partielle.

3. Module de basculement de sphère (2) selon une des revendications 1 ou 2, **caractérisé en ce qu'**il est prévu un goujon d'entraînement (36) sur la première roue dentée (34).

4. Module de basculement de roue (2) selon une des revendications 1 à 3, **caractérisé en ce que** l'arbre d'entraînement (23) est un arbre cannelé, en particulier un arbre à deux dents.

5. Module de basculement de sphère (2) selon l'une quelconque des revendications 1 à 4, **caractérisé en ce que** l'arbre d'entraînement (23) et la première roue dentée (34) sont montés de façon rotative autour de leurs axes centraux respectifs.

6. Module de basculement de sphère (2) selon l'une quelconque des revendications 1 à 5, **caractérisé en ce qu'**un anneau de fermeture (22), qui peut basculer de concert avec le boîtier (12) aussi bien autour de l'axe de rotation (48) qu'autour de l'axe de basculement (41), est disposé sur la première roue dentée (34).

7. Module de basculement de sphère (2) selon la revendication 6, **caractérisé en ce que** l'anneau de fermeture (22) est réalisé de façon à transmettre un mouvement de rotation de la première roue dentée (34) au boîtier (12) autour de l'axe de rotation (48) et à découpler de l'arbre d'entraînement un mouvement de basculement du boîtier (12) autour de l'axe de basculement (41).

8. Module de basculement de sphère (2) selon la revendication 6 ou 7, **caractérisé en ce que** l'anneau de fermeture (22) est muni d'un dispositif de logement (40) dans lequel le goujon d'entraînement (36) peut être placé avec une profondeur d'engagement variable, dans lequel le dispositif de logement (40) sur l'anneau de fermeture (22) est disposé en position décalée de 90° par rapport à l'axe de basculement (41).

9. Module de basculement de sphère (2) selon l'une quelconque des revendications 1 à 8, **caractérisé en ce qu'**il est prévu, pour le verrouillage et le déverrouillage du module de basculement de sphère (2) dans le pivot à rotule (11), une broche (42) qui peut être engagée et retirée dans le pivot à rotule (11).

10. Module de basculement de sphère (2) selon la revendication 9, **caractérisé en ce qu'**il est prévu un entraînement de broche pour entraîner la broche (42), qui comprend une deuxième roue dentée (43) avec un filet intérieur, en particulier un filet trapézoïdal, qui est montée de façon rotative sur une extrémité du pivot à rotule (11).

11. Module de basculement de sphère (2) selon la revendication 10, **caractérisé en ce que** la broche (42) présente un filet extérieur, qui engrène dans le filet intérieur de la deuxième roue dentée (43).

12. Module de basculement de sphère (2) selon l'une quelconque des revendications 1 à 11, **caractérisé en ce qu'**une étanchéité (25) est disposée sur le boîtier (12), dans lequel l'étanchéité (25) entoure entièrement le boîtier (12) sur sa périphérie radiale extérieure et recouvre au moins en partie le boîtier (12) sur un côté inférieur (27) du boîtier (12).

13. Module de basculement de sphère (2) selon la revendication 12, **caractérisé en ce que** l'étanchéité (25) présente une partie flexible, de préférence une partie de soufflet (28), qui permet un mouvement de basculement du module de basculement de sphère (2).

14. Module de basculement de sphère (2) selon l'une quelconque des revendications 12 ou 13, **caractérisé en ce que** l'étanchéité (25) est assemblée de façon rotative au pivot à rotule et/ou à un élément de jonction (12), en particulier au moyen d'un anneau tournant (30) disposé sur une extrémité supérieure (29) de l'étanchéité (25).
